# DEMANDE DE BREVET EUROPEEN

(11) **EP 3 489 846 A1**
(43) Date de publication de la demande: **29.05.2019**
(21) Numéro de dépôt: 18207257.9
(22) Date de dépôt: 20.11.2018
(51) Int. Cl.: G06F 17/50

(54) **PROCÉDÉ DE PRÉVISION DU COMPORTEMENT D'UN PRODUIT VIS-À-VIS DE SES PANNES POTENTIELLES**

(30) Priorité: 23.11.2017 FR 1761110
(71) Demandeur: Schneider Electric Industries SAS, 92500 Rueil Malmaison (FR)
(72) Inventeur: CHEVALIER, Marcel, 38050 GRENOBLE Cedex 9 (FR); BOUTIN, Véronique, 38050 GRENOBLE Cedex 9 (FR); CERCUEIL, Michel, 38050 GRENOBLE Cedex 9 (FR)
(74) Mandataire: Brevalex

(57) **Abrégé**

L'invention concerne un procédé de prévision de la probabilité des défaillances techniques d'un produit composé de plusieurs parties distinctes ayant chacune un cycle de vie et une cinétique de dégradation propres., par analyse de la contribution de chaque mode de dégradation de chaque partie à chaque mode de défaillance constaté du produit.

## Description

### DOMAINE TECHNIQUE

L'invention se situe dans le domaine de la prévision du comportement des appareils dans le temps vis-à-vis de leurs pannes potentielles.

Plus précisément, l'invention concerne un procédé de prévision de la probabilité des défaillances techniques d'un produit composé de plusieurs parties distinctes ayant chacune un cycle de vie et une cinétique de dégradation propres.

L'invention concerne aussi un programme d'ordinateur mémorisé sur un support d'enregistrement comportant des instructions pour réaliser les étapes du procédé.

L'invention s'applique plus particulièrement, mais non exclusivement, à l'analyse des produits électrotechniques mais également à des produits chimiques, alimentaires ou biologiques composés de plusieurs parties distinctes ayant chacune un cycle de vie et des cinétiques de dégradation propres.

L'invention concerne également une application du procédé pour déterminer une durée de vie nominale pour un disjoncteur.

### ÉTAT DE LA TECHNIQUE ANTÉRIEURE

De nombreuses méthodes sont disponibles pour traiter l'estimation de la santé des produits, mais elles sont fondées soit exclusivement sur des caractéristiques physiques (courbe de Wöhler, approche de résistance matérielle), soit exclusivement sur des modèles mathématiques (taux de défaillance). De ce fait, il n'existe aucune synergie entre les techniciens qui maîtrisent les produits et leurs modes de défaillance, et ceux qui conçoivent les modèles statistiques pour réaliser la prédiction du comportement des appareils dans le temps vis-à-vis de leurs pannes potentielles. Or, l'approche physique est pertinente pour certains modes de dégradation, mais ne permet pas d'avoir une vue globale du système tandis que l'approche purement mathématique conduit souvent à des modèles trop généraux pour tenir compte de la structure profonde des produits analysés.

Un but de l'invention est de pallier les inconvénients de l'art antérieur décrits ci-dessus, en permettant de prendre en compte les conditions d'usage et d'environnement dans les modèles statistiques de vieillissement des produits, et par conséquent dans leurs modes et probabilité de défaillance.

### EXPOSÉ DE L'INVENTION

Le but de l'invention est atteint au moyen d'un procédé de prévision de la probabilité des défaillances techniques d'un produit P composé de plusieurs parties distinctes ayant chacune un cycle de vie et des cinétiques de dégradation propres, caractérisé par les étapes suivantes :
- répertorier les différents modes de défaillances possibles du produit,
- déterminer les modes de dégradations possibles pour chaque partie du produit dans les conditions d'utilisation susceptibles de contribuer à chaque mode de défaillance répertorié dudit produit,
- déterminer les cinétiques de dégradation de chaque partie du produit, en fonction des conditions d'usage et d'environnement pour chaque mode de dégradation de chaque sous-ensemble.
- identifier les effets possibles de chacun des modes de dégradation déterminés sur les modes de défaillance du produit P,
- évaluer la loi d'évolution du taux d'occurrence de chaque mode de défaillance répertorié pour chacun des modes de dégradation identifiés,
- estimer la valeur du taux de défaillance en fonction des conditions d'environnement et du niveau de dégradation pour chacun des modes de défaillance du produit, par exemple à partir de mesures expérimentales ou opérationnelles, ou de données disponibles dans la littérature spécialisée.

Le procédé selon l'invention permet d'évaluer une durée de vie cible dans les conditions d'environnement et d'utilisation dudit produit à partir des cinétiques de chaque mode de dégradation de chaque sous-ensemble.

Le procédé selon l'invention comporte en outre une étape consistant à déterminer, pour chaque mode de dégradation, un taux de contribution à chaque mode de défaillance du produit à partir des cinétiques de dégradation déterminées, ainsi que les taux de défaillance associés aux modes de défaillance répertoriés du produit.

Le procédé selon l'invention comporte en outre une étape consistant à déterminer des niveaux ou un taux de dégradation, ainsi que les taux de défaillance associés aux modes de défaillance répertoriés du produit sous les conditions d'environnement et d'utilisation dudit produit, à partir de la cinétique de chaque mode de dégradation de chaque sous-ensemble.

Le procédé selon l'invention est mis en oeuvre par un dispositif comportant:
- une première unité destinée à répertorier les différents modes de défaillances possibles du produit,
- une deuxième unité destinée à lister les modes de dégradations possibles pour chaque partie du produit dans les conditions d'utilisation susceptibles de contribuer à chaque mode de défaillance répertorié dudit produit,
- une troisième unité de calcul destinée à quantifier les effets possibles de chaque mode de dégradation déterminé sur les modes de défaillance du produit, à calculer le taux d'occurrence de chaque mode de défaillance répertorié, pour chacun des modes de dégradation déterminés, à estimer la valeur du taux de défaillance pour chacun des modes de défaillance du produit dans des conditions d'environnement et d'utilisation réelles à partir de mesures, et à déduire la valeur du taux de contribution de chaque mode de dégradation à chaque mode de défaillance du produit P en fonction des taux d'occurrence mesurés pour chacun des modes de dégradation,
- une quatrième unité de calcul destinée à déterminer le taux de dégradation en fonction de la loi cinétique de dégradation, pour chaque mode de dégradation de chaque sous-ensemble.

Le procédé et le dispositif selon l'invention permettent de réaliser une prévision fine du comportement des appareils dans le temps vis-à-vis de leurs pannes potentielles, sur la base de mesures réelles des conditions d'usage et d'environnement d'un appareil ou d'un produit à analyser, et de modèles physiques et mathématiques conçus en fonction de ces mesures réelles.

L'invention concerne également une application du procédé pour déterminer des niveaux ou un taux de dégradation, ainsi que les taux de défaillance associés aux modes de défaillance répertoriés d'un disjoncteur composé d'un Déclencheur, d'une partie Mécanisme, et d'une partie Auxiliaires.

L'invention concerne également une application du procédé pour déterminer des niveaux ou un taux de dégradation, ainsi que les taux de défaillance associés aux modes de défaillance répertoriés d'un produit chimique.

L'invention concerne également une application du procédé pour déterminer des niveaux ou un taux de dégradation, ainsi que les taux de défaillance associés aux modes de défaillance répertoriés d'un produit biologique.

L'invention concerne également et une application du procédé selon l'invention pour déterminer des niveaux ou un taux de dégradation, ainsi que les taux de défaillance associés aux modes de défaillance répertoriés d'un produit alimentaire.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles :

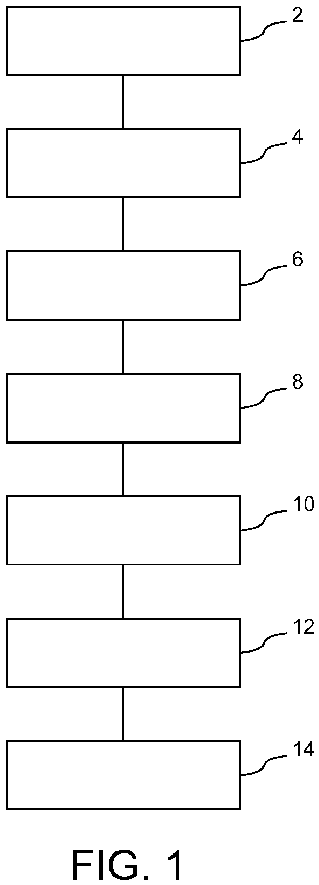

- la figure 1 est un organigramme représentant schématiquement les étapes du procédé selon l'invention dans un exemple particulier d'application.

### EXPOSÉ DÉTAILLÉ DES MODES DE RÉALISATION PARTICULIERS

L'invention sera décrite par référence à la figure 1 dans une application particulière visant à définir un modèle de prédiction des défaillances techniques d'un disjoncteur.

A cet effet, lors d'une première phase 2, dite de décomposition, le disjoncteur est décomposé en trois sous-ensembles distincts constitués d'un Déclencheur A1, d'une partie Mécanisme A2, et d'une partie Auxiliaires A3.

Une deuxième phase 4 consiste à déterminer les modes de dégradation possibles pour chaque sous-ensemble du disjoncteur. Au cours de cette deuxième phase 4, les techniciens effectuent des tests réels afin de décrire les modes de dégradation possibles, suivant le niveau des contraintes environnementales (température, humidité, gaz corrosifs, ...) et d'usage (fréquence des opérations, valeur des surtensions, ...). Ainsi, pour le sous-ensemble « Mécanisme » du disjoncteur, on définit par exemple une dégradation de type « corrosion », une autre de type « usure », et une troisième de type « vieillissement des graisses ». Les résultats des essais, combinés avec des avis d'experts et des études bibliographiques lorsque nécessaire, permettent de quantifier le niveau de ces différents modes de dégradation par sous-ensemble.

Ensuite, une troisième phase 6 consiste à identifier, pour chacun des modes de dégradation répertoriés, l'action ultime sur les modes de défaillance du disjoncteur.

Par exemple, pour le mode de dégradation « usure » du sous-ensemble « Mécanisme » du disjoncteur, on estime que dans 40% des cas, l'effet final sera une non-ouverture sur sollicitation, pour 30% une défaillance sur fermeture, et pour 30% un problème de continuité d'énergie électrique. Le tableau ci-dessous illustre cette situation.

| **Modes de défaillance** | | **Non-ouverture sur sollicitation** | **Défaillance sur fermeture** | **Problème de continuité de l'énergie électrique** |
|---|---|---|---|---|
| Sous-ensemble | Modes de dégradation | | | |
| | Usure | 40% | 30% | 30% |
| **Mécanisme** | Corrosion | | | |
| | Vieillissement des graisses | | | |

Une quatrième phase 8 dite de quantification des taux de défaillance, consiste à estimer, pour chacun des modes de dégradation des parties du disjoncteur, la valeur associée du taux de défaillance, dans les conditions constatées d'environnement et d'usage.

Une cinquième phase 10, consiste à déterminer les cinétiques de dégradation pour chaque mode de dégradation de chaque sous-ensemble.

Si les conditions sous lesquelles fonctionne le disjoncteur évoluent, alors la cinétique de chaque mode de dégradation de chaque sous-ensemble fournira le pourcentage de « durée de vie nominale » consommée, avec l'impact correspondant sur sa contribution aux taux de défaillance de l'appareil par le biais des calculs explicités ci-dessus.

A titre d'exemple, si pour le mode de dégradation « Vieillissement des graisses » du sous-ensemble « Mécanisme » du disjoncteur, le constructeur indique une durée de vie de 20 ans sous des conditions dites « standard », et que ce sont la température et l'humidité qui ont été identifiés comme facteurs de vieillissement prépondérants dans ce cas, alors la cinétique de dégradation sera fonction de ces variables. Par exemple, si la température ambiante est continûment supérieure de 20° à la température dite de référence, alors on peut calculer qu'au bout de 10 ans, on aura consommé 73% de la durée de vie prévisionnelle.

## Revendications

1. Procédé de prévision du comportement d'un produit, composé de plusieurs parties distinctes ayant chacune un cycle de vie et des cinétiques de dégradation propres, vis-à-vis de ses pannes potentielles, **caractérisé par** les étapes suivantes :
- répertorier (2) les différents modes de défaillances possibles du produit,
- déterminer (4) les modes de dégradations possibles pour chaque partie du produit dans les conditions d'utilisation susceptibles de contribuer à chaque mode de défaillance répertorié dudit produit,
- déterminer (6) les cinétiques de dégradation de chaque partie du produit, en fonction des conditions d'usage et d'environnement pour chaque mode de dégradation de chaque sous-ensemble
- identifier (8) les effets possibles de chacun des modes de dégradation déterminés sur les modes de défaillance du produit,
- évaluer la loi d'évolution du taux d'occurrence de chaque mode de défaillance répertorié, pour chaque effet identifié et pour chacun des modes de dégradation déterminés,
- estimer (10) la valeur du taux de défaillance en fonction des conditions d'environnement et du niveau de dégradation pour chacun des modes de défaillance du produit.

2. Procédé selon la revendication 1 comportant en outre une étape consistant à déterminer, pour chaque mode de dégradation, un taux de contribution à chaque mode de défaillance du produit à partir des cinétiques de dégradation déterminées, ainsi que les taux de défaillance associés aux modes de défaillance répertoriés du produit.

3. Procédé selon la revendication 1, comportant en outre une étape consistant à déterminer des niveaux ou un taux de dégradation, ainsi que les taux de défaillance associés aux modes de défaillance répertoriés du produit sous les conditions d'environnement et d'utilisation dudit produit, à partir de la cinétique de chaque mode de dégradation de chaque sous-ensemble.

4. Application du procédé selon l'une des revendications 1 à 3 pour déterminer des niveaux ou un taux de dégradation, ainsi que les taux de défaillance associés aux modes de défaillance répertoriés d'un disjoncteur composé d'un Déclencheur, d'une partie Mécanisme, et d'une partie Auxiliaires.

5. Application du procédé selon l'une des revendications 1 à 3 pour déterminer des niveaux ou un taux de dégradation, ainsi que les taux de défaillance associés aux modes de défaillance répertoriés d'un produit chimique.

6. Application du procédé selon l'une des revendications 1 à 3 pour déterminer des niveaux ou un taux de dégradation, ainsi que les taux de défaillance associés aux modes de défaillance répertoriés d'un produit biologique.

7. Application du procédé selon l'une des revendications 1 à 3 pour déterminer des niveaux ou un taux de dégradation, ainsi que les taux de défaillance associés aux modes de défaillance répertoriés d'un produit alimentaire.

8. Programme d'ordinateur mémorisé sur un support d'enregistrement, comportant des instructions pour réaliser les étapes du procédé selon la revendication 1 à 3, lorsqu'il est exécuté par un ordinateur.

9. Dispositif d'évaluation d'une durée de vie cible dans les conditions d'environnement et d'utilisation dudit produit à partir des cinétiques de chaque mode de dégradation de chaque sous-ensemble., **caractérisé en ce qu'**il comporte :
- une première unité destinée à répertorier les différents modes de défaillances possibles du produit,
- une deuxième unité destinée à lister les modes de dégradations possibles pour chaque partie du produit dans les conditions d'utilisation susceptibles de contribuer à chaque mode de défaillance répertorié dudit produit,
- une troisième unité de calcul destinée à quantifier les effets possibles de chaque mode de dégradation déterminé sur les modes de défaillance du produit, à calculer le taux d'occurrence de chaque mode de défaillance répertorié, pour chacun des modes de dégradation déterminés, à estimer la valeur du taux de défaillance pour chacun des modes de défaillance du produit dans des conditions d'environnement et d'utilisation réelles à partir de mesures, et à déduire la valeur du taux de contribution de chaque mode de dégradation à chaque mode de défaillance du produit P en fonction des taux d'occurrence mesurés pour chacun des modes de dégradation,
- une quatrième unité de calcul destinée à déterminer le taux de dégradation en fonction de la loi cinétique de dégradation, pour chaque mode de dégradation de chaque sous-ensemble.

10. Dispositif selon la revendication 9, dans lequel l'unité de calcul est adaptée pour déterminer pour chaque mode de dégradation un taux nominal de contribution à chaque mode de défaillance du produit, à partir des cinétiques de dégradation déterminées.
